# EUROPÄISCHE PATENTANMELDUNG

(11) **EP 1 775 821 A1**
(43) Veröffentlichungstag der Anmeldung: **18.04.2007**
(21) Anmeldenummer: 06021063.0
(22) Anmeldetag: 06.10.2006
(51) Int. Cl.: H02J 7/00

(54) **Verfahren und softwaregesteuerte Vorrichtung zur Konfiguration der Betriebsweise einer Ladevorrichtung für Akkumulatoren sowie entsprechende Ladevorrichtung**

(30) Priorität: 11.10.2005 AT 16582005
(71) Anmelder: Fronius International GmbH, 4643 Pettenbach (AT)
(72) Erfinder: Ehrengruber, Andreas, 4655 Vorchdorf (AT); Prielinger, Andreas, 4655 Vorchdorf (AT)
(74) Vertreter: Secklehner, Günter

(57) **Zusammenfassung**

Die Erfindung betrifft ein Verfahren und eine Vorrichtung zur Konfiguration des Betriebsverhaltens einer Ladevorrichtung (1) für Akkumulatoren, bei welchem über eine Bedienerschnittstelle die jeweils benötigten Parameterwerte, wie z.B. Ladestrom, Ladespannung, Ladedauer und dgl. mittels einer Recheneinheit (2) für allgemeine Verwendungszwecke einstellbar sind. Die Einstellung der Parameterwerte wird via ein Softwaremodul (17) vorgenommen. Nach erfolgter Einstellung werden diese Parameterwerte oder ein diese Einstellungen enthaltender Datensatz oder eine diese Einstellungen repräsentierende Kennung in eine Steuervorrichtung (7) der Ladevorrichtung (1) geladen. Mittels dem Softwaremodul (17) sind dabei sämtliche Ladephasen (46-50), wie Hauptladung, Abschlussladung, Erhaltungsladung, Ausgleichsladung, einer von einem Benutzer über das Softwaremodul (17) definierten oder einer aus einer vordefinierten Auswahlmenge ausgewählten Ladekennlinie batteriespezifisch einstellbar, worauf vom Softwaremodul (17) eine den jeweiligen Einstell- bzw. Auswahlwerten für die Ladephasen (46-50) entsprechende Ladekennlinie für eine von einem Benutzer definierte oder für eine aus einer vordefinierten Auswahlmenge ausgewählten Type einer Ladevorrichtung (1) erstellt wird.

## Beschreibung

Die Erfindung betrifft ein Verfahren zur Konfiguration des Betriebsverhaltens einer Ladevorrichtung für Akkumulatoren, eine softwaregesteuerte Vorrichtung zur Konfiguration der Betriebsweise einer Ladevorrichtung für Akkumulatoren, eine Ladevorrichtung für Akkumulatoren und ein System zur Durchführung des einleitend genannten Verfahrens, wie dies in den Ansprüchen 1, 16, 24 und 29 beschrieben ist.

Es sind Ladevorrichtungen für Akkumulatoren, insbesondere industrielle Ladevorrichtungen bekannt, welche anhand einer in der elektronischen Steuervorrichtung hinterlegten, vorprogrammierten Steuersoftware das jeweils erforderliche Ladeverhalten umsetzen. Ferner sind Ladevorrichtungen bekannt, die mittels einer Mehrzahl von außen zugreifbaren bzw. teilweise integrierten und somit nur einem unterwiesenen bzw. beschränkten Benutzerkreis zugänglichen Einstellelementen eine Konfiguration bzw. Veränderung des Ladeverhaltens ermöglichen. Diese beispielsweise durch Schalter, DIP-Switches, Drehregler oder dgl. ausgeführten Einstellelemente sind zumeist innerhalb des Gehäuses angeordnet und nur nach dem Abnehmen oder Öffnen von Gehäuseteilen zugänglich. Dadurch sollen unbefugte, einschneidende Veränderungen der Eigenschaften der Ladevorrichtung möglichst unterbunden werden. Bei von außen zugänglichen Einstellelementen bzw. bei unbeabsichtigter, unbefugter oder unfachmännischer Veränderung des Ladeverhaltens besteht erhöhte Gefahr einer unzulässigen Veränderung des Betriebsverhaltens der Ladevorrichtung, wodurch Schäden an der Ladevorrichtung selbst oder an den zu ladenden Akkumulatoren bzw. sogar an peripheren Vorrichtungen verursacht werden können, wenn der Akkumulator durch eine fehlerhafte Aufladung unbrauchbar bzw. zerstört wird.

Grundsätzlich ist zu erwähnen, dass bei den bekannten Ladegeräten bzw. gemäß den bekannten Verfahren vom Produzenten des Ladegerätes erstellte Kennlinien direkt im Herstellerwerk in das Ladegerät gespeichert werden. Hierzu wird das Ladegerät mit einem Programmiergerät, das beispielsweise durch einen PC gebildet sein kann, über eine Datenschnittstelle verbunden, sodass anschließend eine oder mehrere Kennlinien vom werksseitigen Programmiergerät über eine Schnittstelle in das Ladegerät gespeichert werden. Diese Kennlinien kann der Benutzer beim Einsatz des Ladegerätes anschließend auswählen und eventuell über diverse Bedienelemente am Ladegerät an die zu ladende Batterie anpassen.

Weiters ist es bereits bekannt, dass ein Benutzer selbst das Ladegerät mit einem PC verbindet und über eine auf einem PC installierte Software geringfügige Anpassungen der Spannungshöhe und/oder der Stromhöhe vornimmt, also eine Verschiebung der Amplitudenhöhen der Ladekennlinie vornehmen kann. Die Charakteristik der Ladekennlinie bleibt dabei jedoch unverändert und kann der Benutzer die in der Spannungs- bzw. Stromhöhe entsprechend angepasste Kennlinie nachfolgend wieder an das Ladegerät übertragen und speichern. Durch ein derartiges Vorgehen wird erreicht, dass der Benutzer eine gewisse Anpassung der Kennlinie und eine Speicherung der geänderten Kennlinie im Ladegerät vornehmen kann, sodass er diese Veränderungen bzw. Anpassungen nicht für jeden Ladevorgang erneut vornehmen muss.

Nachteilig ist hierbei, dass vom Benutzer lediglich eine Kennlinienverschiebung durchgeführt werden kann, also nur geringfügige Änderungen der Kennlinienamplitude möglich sind, wobei für ein derartiges Vorgehen ein erhöhter Aufwand erforderlich ist, nachdem eine Verbindung des Ladegerätes mit einem PC aufgebaut werden muss und eine derartige Amplitudenveränderung in einfacher Art und Weise auch über ein Einstellelement für den Ladestrom und ein Einstellelement für die Ladespannung am Ladegerät selbst durchgeführt werden kann. Weitere Einstellmöglichkeiten der Kennlinie, insbesondere eine Veränderung der Ladecharakteristik bzw. des Kennlinienverlaufes, sind über diese bekannte Software-Programmierung nicht möglich.

Der vorliegenden Erfindung liegt die Aufgabe zugrunde, eine fehlersichere Einstellung von Ladekennlinien an einer Ladevorrichtung für Akkumulatoren zu erzielen, ohne dadurch die Gerätekosten, insbesondere den Hardwareaufwand für die Ladevorrichtung, wesentlich zu erhöhen. Eine weitere, insbesondere davon unabhängige Aufgabe der Erfindung liegt darin, eine möglichst flexible Einstellung der Ladekennlinie zu ermöglichen, um Vorort eine Anpassung der Ladekennlinie des Ladegerätes an den jeweiligen Akkumulator vornehmen zu können oder eine benutzerspezifische Ladekennlinie erstellen zu können. Eine weitere Aufgabe der Erfindung liegt darin, dass ein OEM-Partner eines Ladegeräte-Herstellers für seine Kunden bzw. Anwendungsfälle eigenständig entwickelte Kennlinien in einem Ladegerät umsetzen kann.

Die jeweilige Aufgabe der Erfindung wird durch die Maßnahmen gemäß Anspruch 1, durch eine Vorrichtung nach Anspruch 16 bzw. durch eine Ladevorrichtung nach Anspruch 24 gelöst.

Vorteilhaft ist dabei, dass umfangreiche Einstellhardware, wie z.B. Schalter, Taster, Dreh- bzw. Schieberegler, zur Veränderung des Ladeverhaltens der Ladevorrichtung gegebenenfalls sogar gänzlich erübrigt werden kann, sodass die gesamten Hardwarekosten für die Ladevorrichtung reduziert werden können. Alternativ ist es zwar auch möglich, parallel zur softwaregesteuerten Konfiguration über die standardmäßige Recheneinheit, auch an der Ladevorrichtung eine hardwarebasierende Konfiguration der Ladekennlinien zu ermöglichen. In einem derartigen Fall stellt die Hardwareparametrierung an der Ladevorrichtung parallel zum Softwaremodul für die allgemeine Recheneinheit eine mögliche Option dar. Nachdem eine hardwaremäßig ausgeführte, relativ leicht zugängliche Bedienerschnittstelle mit Potentiometer, Schalter und dgl. nicht mehr zwingend erforderlich ist, wird auch die Gefahr von Fehleinstellungen durch ungeschulte bzw. unbefugte Benutzer bzw. die Gefahr von unbeabsichtigten Veränderungen der korrekten Einstellungen minimiert. Schäden am Gerät bzw. an den zu ladenden Akkumulatoren können dadurch mit erhöhter Sicherheit vermieden werden, obwohl grundsätzlich ein kostengünstigerer bzw. einfacherer Aufbau der Ladevorrichtung möglich ist. Von besonderem Vorteil ist weiters, dass ein Anwender bzw. Anbieter eines erfindungsgemäßen Systems die Möglichkeit erhält, eigens erstellte bzw. individuell angepasste Ladekennlinien, welche den jeweiligen Anforderungen möglichst optimal entsprechen, jederzeit erstellen zu können. Insbesondere ist die Bildung mehrerer Varianten von Ladekennlinien bzw. Ladecharakteristiken durch einen Bediener der Software bzw. der Ladevorrichtung einfach möglich. Von besonderem Vorteil ist weiters, dass ein OEM-Partner bzw. ein OEM-Anbieter kein ladetechnisches Know-How an den Produzenten des Ladegerätes weitergegeben werden muss, um die entsprechende Ladekennlinie optimal umsetzen zu können. Insbesondere können vom Hardware-Lieferanten Standardkomponenten eingesetzt werden, woraus der OEM-Partner ein entsprechendes Ladegerät zusammenstellen kann und die entsprechenden Kennlinien für sich eigenständig programmieren kann. Ferner lässt sich durch die erfindungsgemäßen Maßnahmen eine entsprechende Ladevorrichtung durch eine Übertragung bzw. einen einfachen Download einer neuen Ladekennlinie stets bzw. längerfristig auf dem aktuellen Stand der Technik halten. Bereits an Lieferanten oder Kunden ausgelieferte Geräte brauchen somit nicht mehr zurück zum Hersteller gesendet werden, um eine Optimierung des Ladeverhaltens zu programmieren. Beispielsweise ist eine relativ einfache Anpassung an neue Batterietechnologien bzw. an aktuelle Erkenntnisse aus der Ladetechnologie problemlos möglich, indem man diese Neuerungen in das technische Verhalten der Ladevorrichtung einfließen lässt. So ist z.B. eine einfache Optimierung der Ladekennlinien möglich, indem die jeweilige Kennlinien bzw. die gewünschten Werte verändert werden und die neuen Daten in das Ladegerät übertragen werden. Durch die vor allem für befugte Benutzer bei Bedarf optimierbaren Kennlinien bzw. Kennlinien-Phasen können auch längere Lebensdauern bzw. höhere Ladekapazitäten für die Akkumulatoren erreicht werden, als würden unterschiedliche Batterietypen jeweils mit der gleichen Kennlinie aufgeladen werden. Nicht zuletzt durch die hochflexible und erforderlichenfalls sogar besonders detaillierte, softwarebasierende Konfigurationsmöglichkeit der Ladecharakteristik können auch Kleinserien einer bestimmten Ladegerätetype relativ kostengünstig und problemlos zur Verfügung gestellt werden bzw. sind spezielle Ladegerätetypen ohne besondere hardwaretechnische Veränderungen ebenso realisierbar. Dies stellt sich als weiterer Nutzen für den Produzenten bzw. Anbieter einer erfindungsgemäßen Ladevorrichtung dar. Ferner ist von Vorteil, dass trotz des Umstandes, dass unterschiedliche Ladevorrichtungen häufig unterschiedliche Kennlinienformen bzw. unterschiedliche Kennlinien-Phasen erfordern, eine Anpassung an die jeweilige Ladevorrichtung ermöglicht ist, sodass ein einziges Softwaremodul für mehrere, baulich unterschiedliche Ladevorrichtungen eingesetzt werden kann.

Von Vorteil sind auch die zusätzlichen Maßnahmen gemäß Anspruch 2, da über diese softwarebasierende Definition von Grenzwerten für Batterie-Unterspannung und Batterie-Überspannung in Abhängigkeit von bestimmten Temperaturverhältnissen eine optimale Aufladung der Batterie bzw. ein zuverlässiger Schutz derselben vor einer Überladung in einfacher Art und Weise bewerkstelligt ist.

Vorteilhaft sind aber auch die Maßnahmen nach Anspruch 3, da dadurch sichergestellt ist, dass sich nach dem Erreichen des vollständig geladenen Zustandes der Batterie, woraufhin die Ladespannung bevorzugt abgesenkt wird, automatisch eine Ladephase für Erhaltungsladung anschließt. Dies erbringt den Vorteil, dass die Selbstentladung der Batterie durch eine solche Erhaltungsladung zumindest weitgehendst ausgeglichen wird und die Batterie somit ständig einsatzbereit bzw. stets vollständig geladen ist. Weiters ist von Vorteil, dass eine für eine automatische Erhaltungsladung konfigurierte Ladevorrichtung beliebig lange an der Batterie angeschlossen bleiben kann, sodass von einem Benutzer keinerlei Kontroll- bzw. Abschaltmaßnahmen nach dem Erreichen des Vollladezustandes notwendig sind.

Von Vorteil sind auch die weiterführenden Maßnahmen gemäß Anspruch 4, da dadurch softwaremäßig konfigurier- und definierbar ist, ob eine Ladevorrichtung eine Ausgleichsladung vornehmen soll, falls der an die Ladevorrichtung angeschlossenen Batterie von einem Verbraucher elektrische Energie entnommen wird. Die in einfacher Art und Weise softwaremäßig entsprechend konfigurierte Ladevorrichtung liefert sodann den Mehrbedarf an Strom bzw. an Energie und verhindert dennoch ein Überladen der mit der Ladevorrichtung verbundenen Batterie.

Von Vorteil sind auch die Maßnahmen gemäß Anspruch 5, da dadurch eine Ladevorrichtung problemlos auf jene Werte konfiguriert bzw. adaptiert werden kann, welche vom Hersteller der jeweils zu ladende Batterie vorgeschrieben bzw. empfohlen wurden, um eine schonende, aber dennoch rasche und effiziente Aufladung der Batterie zu erzielen. Unabhängig davon kann eine Ladevorrichtung via diese softwaremäßige Konfigurationsmöglichkeit von Ladecharakteristiken auch auf andere Werte, welche sich z.B. gemäß Erfahrungswerten aus der Praxis bewährt haben, jederzeit adaptiert werden.

Von besonderem Vorteil sind auch die Maßnahmen gemäß Anspruch 6, da dadurch von einem Bediener des Softwaremoduls einfach festgelegt werden kann, wie sich eine mit diesem softwarebasierenden Werkzeug konfigurierte Ladevorrichtung beim Auftreten eines Fehlers verhalten soll. Gegebenenfalls können dadurch auch ältere Batterien bzw. Batterien, welche bereits seit längerer Zeit im Einsatz sind und daher von den Idealwerten gemäß dem anfänglichen Gebrauch vielfach etwas abweichen, dennoch vollständig bzw. bestmöglich geladen werden. Darüber hinaus kann durch die benutzerseitige Einstellung des jeweiligen Fehlerverhaltens passend reagiert werden, wenn von der Ladevorrichtung untypische Ladeprozesse bzw. Batteriezustände detektiert werden. Insbesondere ist eine derartige Fehlererkennung einer Ladevorrichtung durch eine automatische Überwachung des Ladestroms, der Batteriespannung und/oder der Temperatur an der Batterie definiert. Gemäß einer vorteilhaften Ausführungsform weist die Ladevorrichtung wenigstens ein Temperaturerfassungsmittel auf, mit welchem die Batterietemperatur sensorisch erfassbar und auswertbar ist.

Von Vorteil sind auch die weiterführenden Maßnahmen nach Anspruch 7 und/oder 8, da dadurch die Gefahr von Fehleinstellungen minimiert wird bzw. die Gefahr einer Beschädigung der Ladevorrichtung bzw. der zu ladenden Akkumulatoren deutlich reduziert wird. Eine derartige Plausibilitätsprüfung wäre insbesondere bei einer Umsetzung über eine reine Hardwareschnittstelle zur Veränderung von Einstellungen an der Ladevorrichtung kaum bzw. nur mit beträchtlichem Aufwand möglich.

Durch die besonderen Maßnahmen nach Anspruch 9 kann der Benutzer auf unzulässige bzw. inadäquate Einstellungen hingewiesen werden und kann es dann im Ermessen des Benutzers bzw. Bedieners liegen, diese Einstellungen abzuändern bzw. beizubehalten, sofern der Hinweis lediglich warnend und nicht verweigernd bzw. ablehnend wirkt.

Von besonderem Vorteil sind auch die Maßnahmen nach einem oder mehreren der Ansprüche 10 bis 13. Dadurch wird erreicht, dass eine Veränderung von Einstellungen durch unbefugte Personen bzw. durch einen nicht sachverständigen Personenkreis sicher und in einfacher Art und Weise unterbunden wird. Etwaige Fehleinstellungen und daraus resultierende Schäden können somit zuverlässig unterbunden bzw. auf ein Minimum reduziert werden, da die entsprechenden Zugriffs- bzw. Bedienungsrechte einem bestimmten Personenkreis vorenthalten werden.

Von Vorteil sind auch die Verfahrensschritte nach Anspruch 14, da dadurch stets nachvollzogen werden kann, wer die jeweiligen Einstellungen für die Ladevorrichtungen gewählt bzw. getroffen hat. Beispielsweise bei einem Schadensfall ist eine einfache Rückverfolgbarkeit und Benachrichtigung des jeweiligen Konfigurators der Ladevorrichtung möglich bzw. können sodann umgehende Abstell- bzw. Bereinigungsmaßnahmen ergriffen werden.

Von Vorteil sind auch die Maßnahmen gemäß Anspruch 15, da durch einen derartigen "Upload" in die standardisierte Recheneinheit die jeweiligen Einstellungen des Ladegerätes komfortabel ausgelesen, kontrolliert, bei Bedarf verändert und wieder in die Ladevorrichtung übertragen werden können.

Mit einer softwaregesteuerten Vorrichtung gemäß Anspruch 16 erzielbare Vorteile sind der vorhergehenden Beschreibung zu entnehmen.

Bei einer Weiterbildung dieser Vorrichtung nach Anspruch 17 ist von Vorteil, dass eine eindeutige, physikalische Zuordnung zwischen der Recheneinheit und der anzubindenden Ladevorrichtung geschaffen ist, da die Kabelverbindung etwaige Missverständnisse in der Gerätezuordnung weitgehendst ausschaltet. Von Vorteil ist weiters, dass die angegebenen, standardisierten Schnittstellen eine einfache und bewährte Datenübertragung ermöglichen und eine standardmäßige Recheneinheit zur Anbindung an die Ladevorrichtung geeignet ist.

Bei der alternativen Ausgestaltung gemäß Anspruch 18 ist von Vorteil, dass der Manipulationsaufwand zur Herstellung einer datentechnischen Verbindung zwischen der softwaregesteuerten Vorrichtung und einem Aufladegerät, insbesondere zwischen der Recheneinheit und einer Ladevorrichtung minimiert wird.

Von besonderem Vorteil ist auch die Weiterbildung nach einem oder mehreren der Ansprüche 19 bis 22. Dadurch wird erreicht, dass der Zugriff auf benutzungs- bzw. verwendungskritische Veränderungsroutinen einem beschränkten bzw. berechtigten Benutzerkreis vorenthalten bleibt. Fehleinstellungen und damit eventuell einhergehende Schäden im Aufladesystem bzw. unzureichende Aufladungen von betriebsrelevanten Akkumulatoren können dadurch in einfacher und zuverlässiger Art und Weise unterbunden bzw. reduziert werden.

Durch die vorteilhafte Weiterbildung nach Anspruch 23 wird beim Bediener der softwaregesteuerten Vorrichtung eine erhöhte Bewusstseinsbildung erzielt, sodass leichtfertige Veränderungen der Betriebsweise der Ladevorrichtung hintan gehalten werden können. Darüber hinaus kann die elektronische Hinterlegung bzw. Dokumentation der Einstellerdaten eventuell notwendige Überprüfungs- bzw. Adaptierungsaktionen erleichtern.

Effekte bzw. Vorteile, welche mit einer Ladevorrichtung gemäß Anspruch 24 erzielbar sind, wurden vorhergehend beschrieben.

Von Vorteil ist bei einer Weiterbildung der Ladevorrichtung nach Anspruch 25, dass eine Rückverfolgbarkeit betreffend den Bediener der externen, rechnerseitigen Konfigurations- bzw. Parametriersoftware bzw. bezüglich des Einstellers des Ladeverhaltens unzweifelhaft ermöglicht ist.

Von Vorteil ist auch eine Weiterbildung nach Anspruch 26, da dadurch die jeweiligen Einstellungswerte bzw. die Daten des Einstellers einfach ausgelesen werden können und via übersichtliche, rechnerseitige Masken visualisiert und beispielsweise die Ladekennlinien problemlos auch grafisch ausgewertet werden können.

Vorteilhaft ist auch eine Ausführung nach Anspruch 27, da dadurch beim Vorhandensein einer bevorzugt grafischen bzw. textbasierenden Anzeigevorrichtung auch ohne Verwendung einer externen Recheneinheit zumindest die vorhandene Konfiguration bzw. die aktuelle Einstellung einfach bestimmt werden kann. Dies kann bei einer Ausgabe von Kennungen via Vergleichstabellen oder mittels Hilfsprogrammen bzw. durch Inanspruchnahme einer Servicedienstleistung des Produzenten bzw. Händlers erfolgen.

Durch die Ausgestaltung nach Anspruch 28 ist überdies direkt an der Ladevorrichtung eine Visualisierung bzw. Programmierung von Einstellungen bzw. Ladekennlinien ermöglicht. Die Anbindung einer externen Recheneinheit mit dem entsprechenden Softwaremodul ist somit nicht in allen Fällen erforderlich.

Die Vorteile eines Systems gemäß Anspruch 29 sind in adäquater Zuordnung aus den vorhergehenden Beschreibungsteilen zu entnehmen.

Die Erfindung wird im nachfolgenden anhand der in den Zeichnungen dargestellten Ausführungsbeispiele näher erläutert.

Es zeigen:
- Fig. 1: eine Ladevorrichtung für Akkumulatoren in datentechnischer Verbindung mit einer Recheneinheit für allgemeine Verwendungszwecke in vereinfachter, schematischer Darstellung;
- Fig. 2: ein Blockschaltbild des Gerätesystems nach Fig. 1 in schaubildlicher, stark vereinfachter Darstellung;
- Fig. 3: mögliche Kennlinien für ein an der Recheneinheit einstellbares Ladeverhalten für die Ladevorrichtung;
- Fig. 4: ein mögliches Berechtigungsüberprüfungsmittel für die Nutzung des auf einer allgemeinen Recheneinheit ablauffähigen Softwaremoduls in vereinfachter, beispielhafter Darstellung;
- Fig. 5: eine mögliche, softwaretechnische Konfigurationsmaske, welche auf einer allgemeinen Recheneinheit ausführbar ist;
- Fig. 6: eine weitere mögliche Konfigurationsmaske für eine Ladevorrichtung, die via eine über- bzw. nebengeordnete Recheneinheit konfigurierbar ist;
- Fig. 7: eine mögliche Programmmaske zur Auswahl einer von mehreren, vordefinierten Ladekennlinien;
- Fig. 8: eine mögliche Programmmaske zur Neuerstellung bzw. Veränderung von Ladekennlinien einer Ladevorrichtung mittels einer Recheneinheit für allgemeine Verwendungszwecke.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

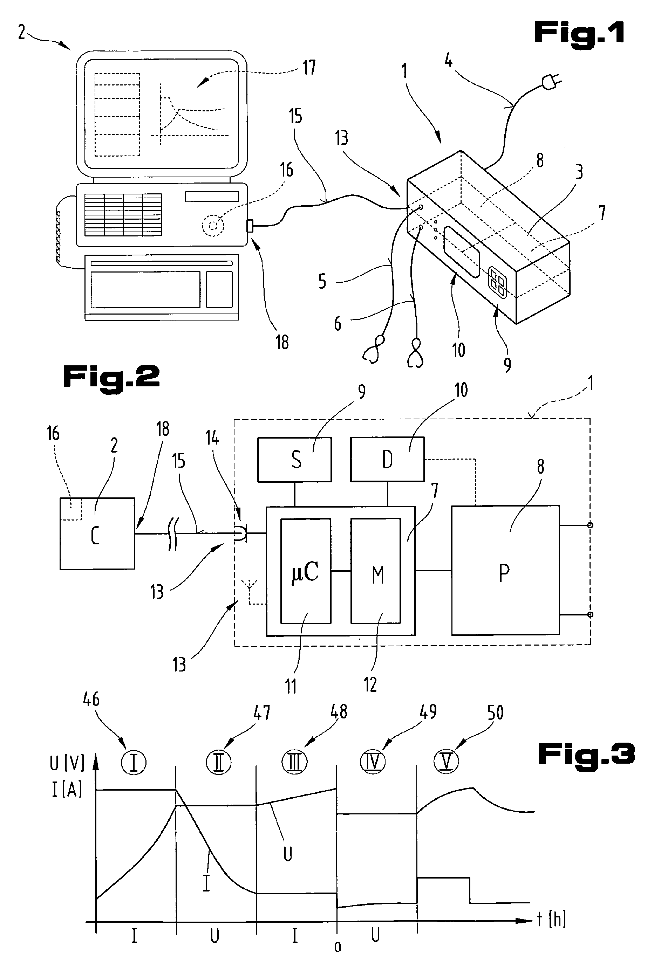

In den Fig. 1 und 2 ist eine Ladevorrichtung 1 zur Aufladung von elektrochemischen Spannungsquellen bzw. von Akkumulatoren und eine mit der Ladevorrichtung 1 in Kommunikationsverbindung stehende Recheneinheit 2 beispielhaft veranschaulicht.

Die Ladevorrichtung 1 weist, wie an sich bekannt, in einem Gehäuse 3 eine elektronische Schaltung auf, mit welcher die über ein Netzkabel 4 aus einem elektrischen Energieversorgungsnetz entnommene, elektrische Energie in adäquater Form in einen elektrochemischen Energiespeicher, insbesondere in einen nicht dargestellten Akkumulator geladen werden kann. Hierfür ist zwischen der elektrischen Schaltung der Ladevorrichtung 1 und dem aufzuladenden Akkumulator zumindest eine Ladeleitung 5, 6 ausgebildet.

Die elektrische Schaltung der Ladevorrichtung 1 umfasst im Wesentlichen eine elektronische Steuervorrichtung 7 und ein elektronisches Leistungsteil 8. Das elektronische, steuerbare Leistungsteil 8 der Ladevorrichtung 1 kann z.B. durch ein so genanntes getaktetes Netzteil gebildet sein. Insbesondere ist das Ladeverhalten bzw. die Betriebsweise des Leistungsteils 8 von der elektronischen Steuervorrichtung 7, welche vorzugsweise durch eine Mikroprozessorsteuerung gebildet ist, beeinflusst bzw. bestimmt.

Die Ladevorrichtung 1 kann gegebenenfalls eine Bedienvorrichtung 9, z.B. Taster, Schalter und/oder Dreh- bzw. Schieberegler umfassen, um das Betriebsverhalten der Ladevorrichtung 1 durch einen Bediener manuell beeinflussen zu können. Gegebenenfalls kann die Ladevorrichtung 1 auch eine Anzeigevorrichtung 10, z.B. ein Display und/oder Leuchtelemente für eine Ladezustands- bzw. Betriebszustandsvisualisierung aufweisen. Die gegebenenfalls vorhandene Bedien- und/oder Anzeigevorrichtung 9, 10 ist dabei mit der Steuervorrichtung 7 und/oder dem Leistungsteil 8 leitungsverbunden, wie dies am besten aus Fig. 2 ersichtlich ist.

Die Steuervorrichtung 7 umfasst bevorzugt einen softwaregesteuerten Mikrokontroller 11, der die Betriebsweise des Leistungsteils 8 und somit das Ladeverhalten der Ladevorrichtung 1 maßgeblich bestimmt. Das Ablaufprogramm bzw. die Software des Mikrokontrollers 11 ist in einer elektronischen Speichervorrichtung 12 hinterlegt, welche extern angeordnet und/oder im Mikrokontroller 11 integriert sein kann. Insbesondere ist in einer Speichervorrichtung 12 ein Steuerprogramm bzw. ein Steuerungsdatensatz hinterlegt, welches bzw. welcher vom Mikrokontroller 11 ausführbar bzw. verarbeitbar ist und somit das Betriebsverhalten der Ladevorrichtung 1 maßgeblich bestimmt. Die Speichervorrichtung 12 kann auch Daten zwischenspeichern bzw. dauerhaft abspeichern. Die Speichervorrichtung 12 besteht zumindest teilweise aus einem permanenten, nicht flüchtigen Speicher, wie z.B. einem EEPROM- bzw. Flash-Speicher oder einem sonstigen, nicht flüchtigen Schreib- und Lesespeicher für Ablaufprogramme und/oder Daten des Mikrokontrollers 11.

Die Ladevorrichtung 1 umfasst weiters zumindest eine Datenschnittstelle 13, welche mit der elektronischen Schaltung, insbesondere mit der Steuervorrichtung 7 der Ladevorrichtung 1 verbunden ist. Im speziellen ist die Datenschnittstelle 13 mit dem Mikrokontroller 11 bzw. mit der Speichervorrichtung 12 leitungsverbunden, um zumindest Daten in die Speichervorrichtung 12 schreiben zu können und gegebenenfalls Daten aus der Speichervorrichtung 12 auslesen und an der Datenschnittstelle 13 bereitstellen zu können. Insbesondere ist zumindest eine unidirektionale Datenschnittstelle 13, bevorzugt jedoch eine bidirektionale Datenschnittstelle 13 an der Ladevorrichtung 1 ausgeführt. Die Datenschnittstelle 13 der Ladevorrichtung 1 ist bevorzugt durch eine kontaktbehaftete Schnittstelle gebildet und als elektrische Steckvorrichtung 14 ausgeführt, wie dies der Fig. 2 zu entnehmen ist. Die Datenschnittstelle 13 kann dabei durch beliebig, aus dem Stand der Technik bekannte, datentechnische Kommunikationsschnittstellen, wie z.B. durch eine RS232-Schnittstelle oder durch eine USB-Schnittstelle gebildet sein.

Wie mit strichlierten Linien schematisch dargestellt wurde, kann die Datenschnittstelle 13 aber auch durch eine draht- bzw. kabellose Kommunikationsschnittstelle gebildet sein und z.B. als Funk- bzw. Infrarot- bzw. Ultraschallschnittstelle ausgeführt sein. Hierfür ist zumindest eine Sende- und/oder Empfangsantenne bzw. eine Sende- und/oder Empfangseinheit für unsichtbares Licht bzw. eine Sende- und/oder Empfangseinheit für akustische Wellen, insbesondere für Ultraschallwellen, in bzw. an der Ladevorrichtung 1 ausführt bzw. mit der Steuervorrichtung 7 verbunden.

Im dargestellten, bevorzugten Ausführungsbeispiel ist die Ladevorrichtung 1 über die Datenschnittstelle 13 und ein Kabel 15 mit der Recheneinheit 2 in kommunikative bzw. datentechnische Verbindung versetzbar. Die Recheneinheit 2 ist dabei bevorzugt durch einen standardisierten Computer, beispielsweise durch einen Personal-Computer, wie z.B. einen Laptop oder einen Desktop-PC oder durch einen Handheld-Computer in Art eines PDA (Personal Data Assistent), eines mobilen Industrieterminals oder dgl. gebildet. Wesentlich ist, dass die Recheneinheit 2 durch eine standardisierte, am Markt verfügbare, softwaregesteuerte Rechenvoitichtung gebildet ist. Diese Recheneinheit 2 für allgemeine Verwendungszwecke umfasst zumindest eine Speichervorrichtung 16, auf welcher Programme und/oder Daten gespeichert bzw. speicherbar sind. Insbesondere ist die Speichervorrichtung 16 zur Aufnahme von benutzerindividuellen Daten bzw. von Softwareprogrammen geeignet. Die Recheneinheit 2 ist dabei zur Ausführung der auf dieser Speichervorrichtung 16 abgelegten Softwareprogramme vorgesehen. Zumindest eines der Softwareprogramme der Speichervorrichtung 16 ist zur Konfiguration bzw. Beeinflussung des Betriebsverhaltens der Ladevorrichtung 1 vorgesehen. Insbesondere umfasst die Speichervorrichtung 16 ein Softwaremodul 17, welches von der Recheneinheit 2 abrufbar, insbesondere ausführbar und auf einem rechnerseitigen Bildschirm bzw. Display visualisierbar ist. Mittels diesem nachfolgend noch näher beschriebenen Softwaremodul 17 bzw. mit der rechnerseitigen Parametriersoftware können Einstellungen für das Betriebsverhalten der Ladevorrichtung 1 vorgenommen werden bzw. vorhandene Einstellungen verändert werden. Dieses Softwaremodul 17, welches zumindest in der Art einer Parametriersoftware ausgeführt ist, dient also zur Beeinflussung bzw. Konfiguration des Betriebsverhaltens der Ladevorrichtung 1. Mittels dieser Parametriersoftware bzw. dem für die Ladevorrichtung 1 erstellten Softwaremodul 17 sind bevorzugt Ladekennlinien für die Ladevorrichtung 1 bzw. deren Steuervorrichtung 7 generierbar und/oder veränderbar. Die an der Parametriersoftware bzw. an der Recheneinheit 2 jeweils eingestellten Parameterwerte bzw. ein diese Einstellungen enthaltender Datensatz oder gegebenenfalls eine diese Einstellungen repräsentierende, eindeutige Kennung ist sodann über eine standardisierte Datenschnittstelle 18 der Recheneinheit in die Ladevorrichtung 1 übertrag- bzw. ladbar. Insbesondere werden die in der Parametriersoftware eingestellten bzw. gewählten Parameterwerte über die Datenschnittstelle 18 der Recheneinheit 2 in die Ladevorrichtung 1 bzw. deren Steuervorrichtung 7 geladen und dauerhaft, d.h. nicht flüchtig, in dessen Speichervorrichtung 12 hinterlegt. Die in die Speichervorrichtung 12 geladenen Einstellungen bzw. Daten beeinflussen sodann die Betriebsweise bzw. das Betriebsverhalten der Ladevorrichtung 1, d.h. dass die Ladecharakteristik der Ladevorrichtung 1 über die an der Recheneinheit 2 vorgenommenen Einstellungen und nachfolgend in die Ladevorrichtung 1 übertragenen Parameterwerte zumindest teilweise, vorzugsweise jedoch maßgeblich bestimmt ist. Bevorzugt ist die Datenschnittstelle 18 der Recheneinheit 2 physikalisch bzw. technisch identisch zur Datenschnittstelle 13 an der Ladevorrichtung 1 ausgeführt. D.h. dass die Recheneinheit 2 bevorzugt über eine serielle Schnittstelle, beispielsweise über eine RS232-Schnittstelle oder über eine USB-Schnittstelle mit der Ladevorrichtung 1 in kommunikative bzw. datentechnische Verbindung versetzt werden kann. Nach dem Abkoppeln bzw. Entfernen der Recheneinheit 2 ist die Ladevorrichtung 1 jedenfalls für sich alleine bzw. eigenständig betriebsfähig. Nach der Aktivierung bzw. Inbetriebnahme der Ladevorrichtung 1 arbeitet diese gemäß den übertragenen Ladekennlinien.

Anstelle der zumindest unidirektionellen Kommunikationsverbindung zwischen der Recheneinheit 2 und der Ladevorrichtung 1 ist bevorzugt eine bidirektionale Kommunikation über die Datenschnittstellen 13, 18 ermöglicht. Vorzugsweise ist mittels der Recheneinheit 2, dem darauf lauffähigen Softwaremodul 17 und via die Datenschnittstellen 13, 18 auch ein "Upload" von Daten bzw. Einstellungen ausgehend von der Ladevorrichtung 1 in die Recheneinheit 2 ermöglicht. D.h. dass die in der Ladevorrichtung 1 hinterlegten Einstellungen bzw. Parameterwerte von der Recheneinheit 2 gelesen und visualisiert werden können, um Überprüfungen und bei Bedarf Abänderungen vornehmen zu können.

In Fig. 3 ist eine mögliche Ladekennlinie für die Ladevorrichtung 1 veranschaulicht. Diese Abbildung wird nachfolgend in Zusammenschau mit den Fig. 1, 2 beschrieben. Die dargestellte Ladekennlinie ist via das rechnerseitige Softwaremodul 17 bzw. mittels der Parametriersoftware auswählbar und/oder hinsichtlich der Parameterwerte generierbar. Im dargestellten Ausführungsbeispiel gemäß Fig. 3 ist als Ladekennlinie eine IUIoU-Kennlinie gezeigt. Diese Ladekennlinie definiert bestimmte Ladezyklen, in welchen die Ladespannung bzw. der Ladestrom auf vorgegebene Werte geregelt bzw. konstant gehalten wird, um eine effiziente und schonende bzw. schnelle Aufladung des Akkumulators zu erzielen. Die jeweiligen Parameterwerte bzw. Vorgaben sind dabei in der Steuervorrichtung 7 der Ladevorrichtung 1 hinterlegt. Selbstverständlich sind auch andere, aus dem Stand der Technik bekannte Ladekennlinien über die Parametriersoftware auswählbar, gegebenenfalls veränderbar und über die Datenschnittstellen 18, 13 in die Steuervorrichtung 7 der Ladevorrichtung 1 übertragbar.

In den einzelnen Zeitabschnitten der Strom- bzw. Spannungskennlinien gemäß dem Diagramm in Fig. 3 wird jeweils der Strom bzw. die Spannung für den Akkumulator konstant gehalten und nach Erreichen der Vollladungsschwelle eine Phase für Erhaltungsladung gestartet.

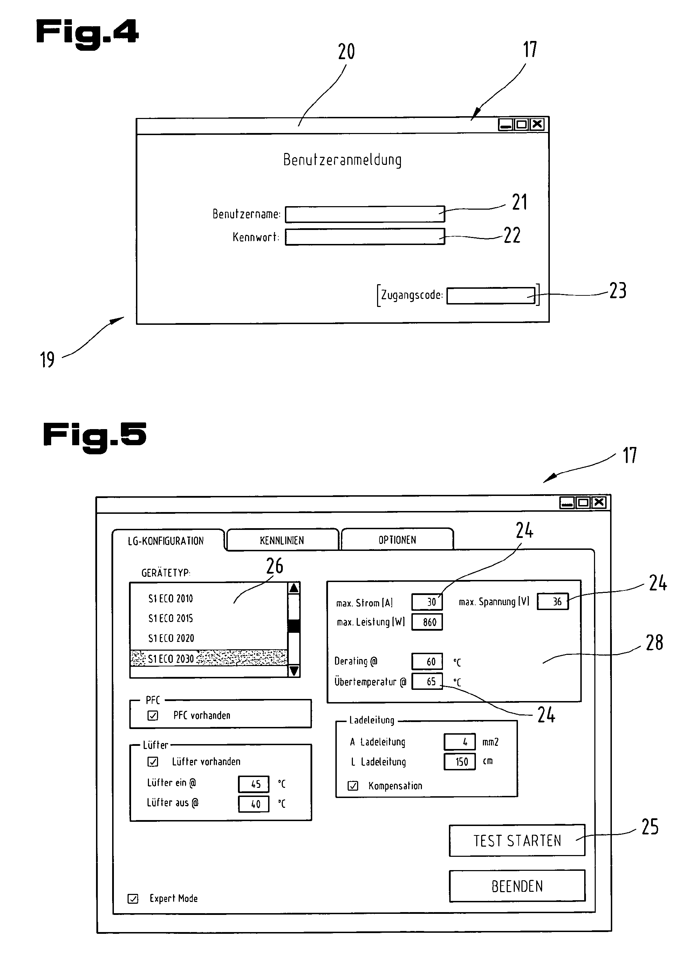

In den Fig. 4 bis 7, welche in Verbindung mit den Fig. 1 bis 3 beschrieben werden, sind Programmmasken der Parametriersoftware bzw. des Softwaremoduls 17, das auf der Recheneinheit 2 für allgemeine Verwendungszwecke - siehe Fig. 1 - lauffähig ist und zur Konfiguration bzw. Einstellung der Ladevorrichtung 1 - siehe Fig. 1 - dient, beispielhaft veranschaulicht. Bevorzugt umfasst das Softwaremodul 17 auch ein Berechtigungsüberprüfungsmittel 19, um eine Zugriffsberechtigung bzw. Berechtigung für eine Bedienung gewisser Routinen des Softwaremoduls überprüfen zu können.

Dieses Berechtigungsüberprüfungsmittel 19 kann, gemäß der Darstellung in Fig. 4, durch eine Anmeldemaske 20 gebildet sein. In dieser Anmeldemaske 20 sind z.B. ein Benutzername 21 und ein zugehöriges Kennwort 22 einzugeben, um Zugriff auf sicherheits- bzw. verwendungskritische Funktionen des Softwaremoduls 17 zu erlangen bzw. um überhaupt einen Aufruf des Softwaremoduls 17 bewerkstelligen zu können. Alternativ ist es auch möglich das Berechtigungsüberprüfungsmittel 19 durch ein Programmfenster für die Eingabe eines Codes, insbesondere eines gültigen Zugangscodes 23, zu implementieren, um nach positiv abgeschlossener Überprüfung das Softwaremodul 17 bzw. die Parametriersoftware starten zu können bzw. automatisch starten zu lassen.

Alternativ ist es auch möglich, das Berechtigungsüberprüfungsmittel 19 zur Identifizierung eines Bedieners bzw. zur Überprüfung der Zugriffsrechte auf das Softwaremodul 17 mittels elektronischer Hardware, insbesondere mittels einem elektronischen Schlüssel, wie z.B. einem Dongle für die Recheneinheit 2 bzw. für das Softwaremodul 17, mittels einem RFID-Tag bzw. Transponder oder mittels einem biometrischen Identifizierungsmerkmal, wie z.B. einem Fingerabdruck, zu bewerkstelligen.

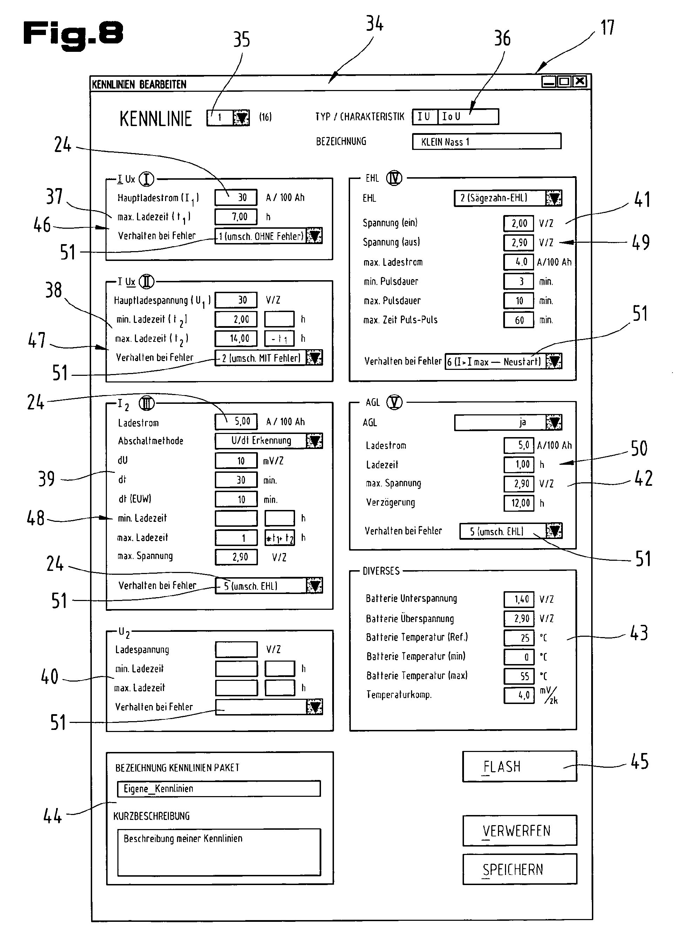

Vor allem vor einem beabsichtigten Zugriff auf Konfigurationsmasken des Softwaremoduls 17, mit welchen schadenskritische Einstellungen vorgenommen werden können, wird bevorzugt eine Identifizierung bzw. eine Berechtigungsüberprüfung vorgenommen. Eine solche Konfigurationsmaske, insbesondere die Konfigurationsmaske zur Generierung, zur Veränderung bzw. für den "Download" von Ladekennlinien ist in Fig. 8 schematisch veranschaulicht worden.

Das Berechtigungsüberprüfungsmittel 19 kann aber auch derart in das Softwaremodul 17 implementiert sein, dass bereits vor der Bedienung des Softwaremoduls 17 eine Berechtigungsüberprüfung vorgenommen wird und unter der Voraussetzung einer positiv abgeschlossenen Berechtigungsüberprüfung eine Bedienung des Softwaremoduls 17 erst ermöglicht ist.

Die Mittel 19 zur Berechtigungsüberprüfung vor einer Verwendbarkeit des Softwaremoduls 17 können aber auch durch eine standardmäßige Systemroutine der Recheneinheit 2, wie z.B. durch eine standardmäßige Passwortabfrage der Betriebssoftware der Recheneinheit 2, gebildet sein.

Alternativ ist es auch möglich, das Berechtigungsüberprüfüngsmittel 19 dann einzusetzen bzw. vom Softwaremodul 17 automatisiert dann aufzurufen, wenn vom Benutzer eine Übertragung der vorgenommenen Einstellungen bzw. Parameterwerte in die Ladevorrichtung 1 gewünscht bzw. ausgewählt wurde. Insbesondere kann nach dem benutzerseitigen Aufrufen des Übertragungsbefehls das Berechtigungsüberprüfungsmittel 19 aktiviert bzw. vom Benutzer der Nachweis einer Autorisierung gefordert werden. Daraufhin ist ein gültiger, elektronischer Schlüssel bzw. eine Identifizierung mittels Benutzername 21 und Kennwort 22 bzw. mittels dem Zugangscode 23 erforderlich, um die vorgenommenen Einstellungen bzw. die erstellten Ladekennlinien für die künftigen Verwendungen funktionswirksam in die Steuervorrichtung 7 der Ladevorrichtung 1 übertragen zu können.

Bevorzugt wird auch der Name, insbesondere der Benutzername 21, und/oder eine sonstige Kennung eines Nutzungsberechtigten bzw. eines die Einstellungen durchführenden Benutzers des Softwaremoduls 17 an die Steuervorrichtung 7 übertragen und in der Ladevorrichtung 1 dauerhaft hinterlegt. Insbesondere werden diese benutzer- bzw. einstellerspezifischen Daten ausgehend von der Recheneinheit 2 bzw. ausgehend vom Softwaremodul 17 über die Datenschnittstellen 18, 13 in eine nicht flüchtige Speichervorrichtung 12 der Ladevorrichtung 1 geladen und für etwaige, nachfolgende Überprüfungs- bzw. Nachforschungszwecke dauerhaft hinterlegt. Für derartige Überprüfungs- bzw. Nachforschungszwecke ist vorgesehen, dass die Einstellungen bzw. Parameterwerte und/oder der Name bzw. Code zumindest eines letztgültigen Einstellers bzw. Nutzungsberechtigten, welcher in der Speichervorrichtung 12 der Ladevorrichtung 1 hinterlegt wurde, über die Datenschnittstellen 13, 18 in die Recheneinheit 2 übertragen werden, um diese Daten via das Softwaremodul 17 zu visualisieren. D.h. die jeweiligen Einstellungen bzw. Parameterwerte und/oder die benutzerspezifischen Daten eines Benutzers, der diese Ladegeräteeinstellungen gewählt bzw. aktiviert hat, können via das Softwaremodul 17 und die Recheneinheit 2 aus der Ladevorrichtung 1 ausgelesen und für Überprüfungs- bzw. Nachverfolgungszwecke an der Recheneinheit 2, insbesondere an dessen Bildschirm, ausgegeben werden.

Insbesondere ist es zur Erzielung einer erhöhten Verwendungssicherheit des Systems aus Recheneinheit 2 und Ladevorrichtung 1 zweckmäßig, das Berechtigungsüberprüfungsmittel 19 entsprechend einer der vorhergehend beschriebenen Ausführungen auszubilden. Dieses Berechtigungsüberprüfungsmittel 19 kann aber auch umgesetzt werden, indem sich ein Bediener beim Hersteller bzw. Anbieter des Softwaremoduls 17 bzw. der Ladevorrichtung 1 registriert, um die notwendige Berechtigung zur Erstellung eigener Kennlinien bzw. die Autorisierung zur Veränderung von Ladekennlinien zu erlangen. Diese Registrierung im Softwaremodul 17 bzw. beim Anbieter der Software ist vorteilhaft, um im Falle eines durch eine Kennlinie verursachten Fehlers bzw. Schadens, indem z.B. eine Batterie überladen bzw. zerstört wurde oder sonstige Sach- bzw. Personenschäden eingetreten sind, den Verantwortlichen einfach und unstrittig ausfindig zu machen und benachrichtigen zu können. Beim Anbieter des Softwaremoduls 17 bzw. der Parametriersoftware registrierte Bediener bzw. Kunden können auch einfachen Zugriff auf Software-Updates erlagen bzw. Neuheiten und sonstige Benachrichtigungen erhalten. Die genannten Serviceleistungen sind bevorzugt via ein globales Datenübertragungsnetzwerk, insbesondere über das Internet und die Recheneinheit 2 abrufbar.

Bevorzugt umfasst das Softwaremodul 17 bzw. die Parametriersoftware auch ein Plausibilitätsüberprüfungsmittel 24, welches zumindest manchen Eingabefeldern bzw. Eingabemasken der Parametriersoftware zugeordnet ist. Dieses Plausibilitätsüberprüfungsmittel 24 ist zumindest den Eingabefeldern für Ladespannung bzw. Ladestrom zugeordnet, um unzutreffende bzw. überhöhte bzw. zu niedrige Eingabewerte auszuschließen bzw. den Benutzer zumindest einen entsprechenden Warnhinweis geben zu können.

Dieses Plausibilitätsüberprüfungsmittel 24 prüft dabei die gewählten bzw. beabsichtigten Einstellungen im Hinblick auf die Type und/oder die technischen Daten des zu ladenden Akkumulators und/oder im Hinblick auf die zu konfigurierende Ladevorrichtung 1. Erkennt dabei das softwaremäßige Plausibilitätsüberprüfungsmittel 24 des Softwaremoduls 17 unzulässige Einstellungen, werden diese vom Softwaremodul 17 bzw. von der Parametriersoftware 17 entweder erst gar nicht angenommen bzw. können derartige, unzulässige Einstellungen nicht in die Ladevorrichtung 1 übertragen bzw. nicht in der Steuervorrichtung 7 hinterlegt werden. Alternativ oder in Kombination dazu kann das Softwaremodul 17 bzw. die Parametriersoftware einen Benutzer bzw. Bediener der Parametriersoftware darauf hinweisen, dass er eine unzulässige, sicherheitskritische bzw. unter Umständen Schäden verursachende Einstellung gewählt hat. Diese automatisierte Plausibilitätsüberprüfung via das softwarebasierende Plausibilitätsüberprüfungsmittel 24 wird dabei in Abhängigkeit von der jeweiligen Type der Ladevorrichtung 1 bzw. in Kombination mit der Type bzw. Eigenart des zu ladenden Akkumulators jeweils automatisch angepasst.

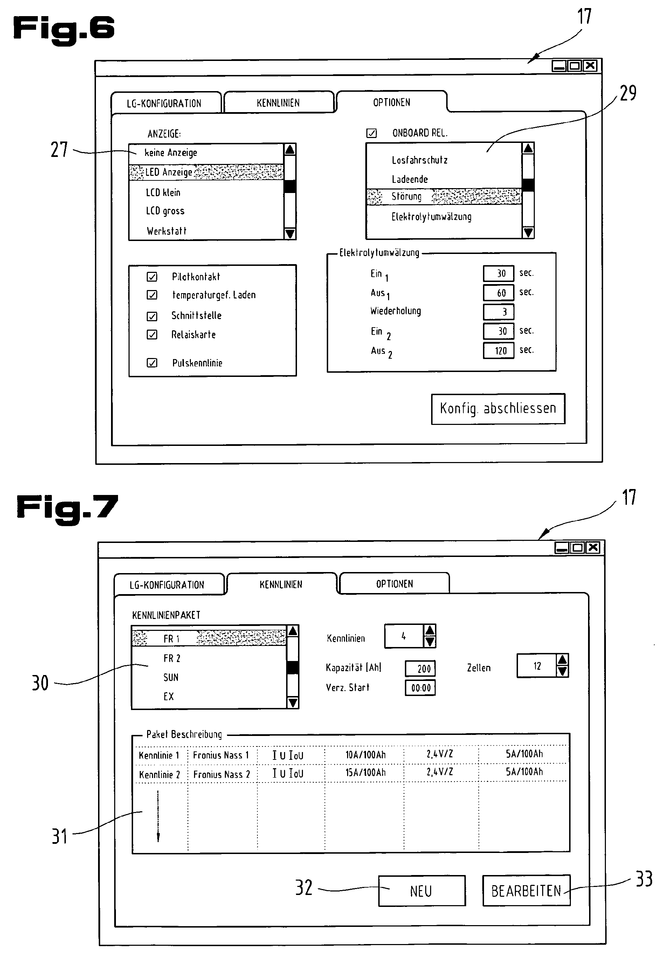

In den Fig. 5 und 6 sind im Detail mögliche Konfigurations- bzw. Parametriermasken zur Konfiguration bzw. Auswahl der jeweiligen Ladevorrichtung 1 veranschaulicht. In der beispielhaften Programmmaske gemäß Fig. 5 kann der entsprechende Ladegerätetyp ausgewählt werden und sind daraufhin dessen technische Grunddaten einstellbar bzw. angezeigt, sofern diese als Datensatz in der Recheneinheit 2 bereits hinterlegt sind. In der Konfigurationsmaske gemäß Fig.6 ist unter anderem auswähl- bzw. definierbar, ob an der Ladevorrichtung 1 eine Anzeige vorhanden ist bzw. welchen Anzeigetyp die Ladevorrichtung 1 aufweist und welche technischen Zusatzkomponenten an der Ladevorrichtung 1 installiert sind. Ebenso ist auswählbar, ob eine Umwälzung des Elektrolyts des Akkumulators via die Ladevorrichtung 1 vorgenommen werden soll. Nach Abschluss der jeweiligen Konfiguration können die jeweiligen Werte bzw. Daten in die Ladevorrichtung 1 testweise oder permanent übertragen werden, indem eine entsprechende Schaltfläche 25 der Parametriersoftware betätigt bzw. aktiviert wird. Die genannten Konfigurations- bzw. Parametriermasken der Parametriersoftware bzw. des Softwaremoduls 17setzen sich unter anderem aus Auswahlfeldern für einen Gerätetyp 26, für einen Anzeigetyp 27, aus einem Leistungsdatenfeld 28, einem Zusatzoptionenfeld 29 und dgl. zusammen. Mittels diesen Ein- bzw. Ausgabefeldern des Softwaremoduls 17 kann die jeweilige Ladevorrichtung 1 parametriert bzw. hinsichtlich ihrer technischen Eigenschaften und Daten konfiguriert werden und können sodann diese Einstellungen bzw. Werte dauerhaft in die Ladevorrichtung 1 übertragen werden, um nachfolgend als so genannte Firmware von der Steuervorrichtung 7 der Ladevorrichtung 1 während des laufenden Betriebes ausgeführt zu werden. Insbesondere kann das Softwaremodul 17 auch als Setup-Software bzw. als Testprogramm für entsprechende Ladevorrichtungen 1 fungieren.

Die in Fig. 5 und 6 dargestellten Masken können aber auch zum Abrufen bzw. Auslesen der jeweiligen technischen Daten bzw. Einstellungen einer an die Recheneinheit 2 angeschlossenen Ladevorrichtung 1 genutzt werden.

In den Fig. 7 und 8 sind Programmmasken zur Auswahl, Neuerstellung oder Veränderung von Ladekennlinien veranschaulicht, wie sie im Softwaremodul 17 bzw. in der Parametriersoftware für die Recheneinheit 2 implementiert sein können.

In der Programmmaske gemäß Fig. 7 ist dabei ein Kennlinienauswahlfeld 30 enthalten, über welches vordefinierte, auf der Recheneinheit 2 gespeicherte und vom Softwaremodul 17 abrufbare Ladekennlinien ausgesucht und aufgerufen werden können. Weiters ist ein Kennlinienbeschreibungsfeld 31 ausgeführt, in welchem zumindest eine Kurzbeschreibung einer einzelnen oder sämtlicher, vordefinierter Ladekennlinien ersichtlich ist. Die Programmmaske gemäß Fig. 7 innerhalb des rechnerseitigen Softwaremoduls 17 für die Ladevorrichtung 1 umfasst weiters zumindest eine Schaltfläche 32 zur Neuerstellung von Kennlinien und zumindest eine Schaltfläche 33 zur Bearbeitung bzw. Veränderung von vordefinierten, auf der Recheneinheit 2 bzw. im Softwaremodul 17 oder in der Ladevorrichtung 1 hinterlegten Ladekennlinien.

In Fig. 8 ist eine Erstellungs- bzw. Bearbeitungsmaske 34 für Ladekennlinien beispielhaft veranschaulicht. Diese Erstellungs- bzw. Bearbeitungsmaske 34 ist Bestandteil des an der Recheneinheit 2 lauffähigen Softwaremoduls 17 bzw. der Parametriersoftware auf der Recheneinheit 2 für allgemeine Verwendungszwecke. In dieser Erstellungs- bzw. Bearbeitungsmaske 34 kann eine Folgenummer der zu ändernden bzw. erstellenden Ladekennlinie eingegeben werden, wie dies anhand des Auswahlfeldes 35 veranschaulicht wurde. Ferner ist der Kennlinientyp, d.h. die Art der Strom- bzw. Spannungskennlinie einzugeben bzw. auszuwählen. Jede der Ladekennlinien beginnt dabei mit der Kennung IU. Insbesondere ist hierbei die gewünschte bzw. benötigte Kennliniencharakteristik auswähl- bzw. einstellbar. Beispielsweise kann im Eingabefeld 36 eine so genannte IUIoU-Ladekennlinie, wie sie in Fig. 3 beispielhaft veranschaulicht wurde, ausgewählt bzw. eingestellt werden, um den gewünschten bzw. benötigen Kennlinientyp zu definieren.

Nachfolgend sind die entsprechenden Parameterwerte für den ausgewählten bzw. eingegebenen Kennlinientyp gemäß Eingabefeld 36 auszuwählen bzw. einzugeben. Insbesondere sind die gewünschten Werte in die Strom- bzw. Spannungsfelder 37, 38, 39, 40 einzugeben. In diesen Strom- bzw. Spannungsfeldern 37 bis 40, welche die diversen Ladezyklen bzw. Ladephasen der gewählten Ladekennlinie repräsentieren, sind beispielsweise der gewünschte Ladestrom, die minimale Ladezeit, die maximale Ladezeit, der Spannungsanstieg, eine Abschalterkennung, ein Verhalten beim Auftreten eines Fehlers oder dgl., einstellbar.

Bevorzugt sind in der Erstellungs- bzw. Bearbeitungsmaske 34 auch Eingabe- bzw. Auswahlfelder 41, 42, 43 für die Art der Erhaltungsladung und/oder der Ausgleichsladung bzw. für diverse andere Einstellungen ausgeführt. Im Eingabe- bzw. Auswahlfeld 41 für die Erhaltungsladung ist unter anderem auswählbar, ob keine Erhaltungsladung, eine Standard-Erhaltungsladung oder eine Erhaltungsladung via eine Sägezahnkennlinie von der Ladevorrichtung 1 ausgeführt werden soll. Ebenso ist in zumindest einer dieser Eingabemasken definierbar, wie die Ladevorrichtung 1 beim Auftreten eines Fehlers reagieren soll. Beispielsweise ist definierbar, dass im Fehlerfall eine Umschaltung auf Erhaltungsladung, ein Neustart des oder eine Beendigung des Ladezyklus stattfinden soll und gegebenenfalls ein Fehlerhinweis an der Anzeigevorrichtung 10 - siehe Fig. 1 - zu signalisieren ist.

Im Eingabe- bzw. Auswahlfeld 43 betreffend "Diverses" stellt z.B. die Eingabe von Werten für Unter- und Überspannung ein Pflichteingabefeld dar.

Ferner ist in der Erstellungs- bzw. Bearbeitungsmaske 34 eine Bezeichnung für die generierte bzw. veränderte Ladekennlinie einzugeben, wie dies anhand des Eingabefeldes 44 veranschaulicht wurde.

Das Softwaremodul 17 bzw. die Parametriersoftware umfasst weiters eine Schaltfläche 45, beispielsweise mit der Bezeichnung "Flash" zur Übertragung bzw. zum Download der vorgenommenen Einstellungen bzw. der ausgewählten Ladekennlinien in die Ladevorrichtung 1. Hierdurch werden die vorgenommenen Einstellungen in der Steuervorrichtung 7 der Ladevorrichtung 1 dauerhaft hinterlegt und sind quasi als Firmware von der elektronischen Schaltung der Ladevorrichtung 1 fortan abruf- und ausführbar.

Gegebenenfalls können auch Schaltflächen zum Verwerfen bzw. Löschen und zum Speichern der generierten Kennliniendaten aus der bzw. in der Speichervorrichtung 16 der Recheneinheit 2 ausgebildet sein.

Nachdem die jeweiligen Einstellungen bzw. Parameterwerte von der Recheneinheit 2 in die Ladevorrichtung 1 übertragen wurden, kann die Kommunikationsverbindung über die Datenschnittstellen 13, 18 beendet werden, indem beispielsweise das Kabel 15 abgesteckt wird. Fortan weist die Ladevorrichtung 1 ihre eigenständige, dauerhaft hinterlegte Betriebssoftware bzw. Firmware auf. Nach dem Einschalten der Ladevorrichtung 1 wird diese Betriebssoftware von der Steuervorrichtung 7 geladen bzw. werden die Konfigurationsdaten aus der Speichervorrichtung 12 gelesen. Ferner wird der entsprechende Kennlinienblock bzw. der jeweilige Datensatz für die vorgesehenen Ladekennlinien geladen. Der weitere Betrieb der Steuervorrichtung 7 erfolgt dann in Anlehnung an diese Einstellungen bzw. Parameterwerte aus der nicht flüchtigen Speichervorrichtung 12. Die jeweiligen Steuerbefehle bzw. Daten werden dann an das Leistungsteil 8 übergeben, um eine entsprechende Ladecharakteristik zu erzielen. Gegebenenfalls können die entsprechenden Betriebszustandsdaten bzw. Einstellungen auch an einer gegebenenfalls vorhandenen Anzeigevorrichtung 10 ausgegeben werden und zumindest teilweise durch einen Bediener via eine gegebenenfalls ausgebildete Bedienvorrichtung 9 verändert bzw. adaptiert werden. Nach der Übertragung der Einstellungen bzw. Parameterwerte ist die Ladevorrichtung 1 jedenfalls voll einsatzfähig und ist eine Kommunikation mit der Recheneinheit 2 nicht mehr erforderlich. Erst für den Fall, dass die Betriebsweise bzw. das Ladeverhalten der Ladevorrichtung 1 verändert werden soll, wird die Recheneinheit 2 wieder an die Ladevorrichtung 1 angekoppelt und ist sodann eine Anpassung bzw. Veränderung der Ladekennlinien der Ladevorrichtung 1 möglich. Eine bevorzugte Art und Weise zur technischen Beschreibung bzw. Definition von erfindungsgemäß veränderbaren Ladekennlinien wird nachfolgend geschildert. Die folgenden Ausführungen beziehen sich dabei auf die wesentlichsten Lade- bzw. Batterieparameter, welche für die Veränderung der Charakteristik einer Ladekennlinie von besonderer Bedeutung sind:

Festzuhalten ist in diesem Zusammenhang, dass die Strom- bzw. Spannungsfelder 37, 38, 39 und die Eingabe- bzw. Auswahlfelder 41, 42 gemäß Fig. 8 den einander folgenden Ladephasen 46 bis 50 der in Fig. 3 beispielhaft veranschaulichten IUIoU-Ladekennlinie zugeordnet sind. Mittels diesen Eingabe- bzw. Auswahlfeldern 37 bis 39 und 41, 42 des Softwaremoduls 17 ist dabei eine komplette IUIoU-Ladekennlinie zur Gänze beschreibbar und in ihrer Charakteristik bzw. in ihrem Verlauf exakt definierbar. Die Ladephasen 46 bis 50 für eine Batterie bzw. eine Ladevorrichtung 1 können dabei aus einer Gruppe umfassend Hauptladung, Abschlussladung, Erhaltungsladung und Ausgleichsladung ausgewählt sein.

Wesentlich ist, dass für jede dieser Ladephasen 46 bis 50 wenigstens die jeweiligen Amplitudenwerte der Strom- bzw. Spannungskennlinie via das Softwaremodul 17 festlegbar sind und zudem die jeweils relevanten Zeitdauern bzw. Zeitgrenzen für diese Ladephasen 46 bis 50 im Softwaremodul 17 wähl- bzw. eingebbar sind. So ist für die erste Ladephase 46 mit dem Softwaremodul 17, insbesondere mittels dem Strom- bzw. Spannungsfeld 37 definierbar, wie hoch der Hauptladestrom I₁ sein soll, wie dies aus der Darstellung gemäß Fig. 8 einfach ersichtlich ist. Zudem ist die maximale Ladezeit t₁ definierbar. Während dieser ersten Ladephase 46 wird der Ladestrom von der Ladevorrichtung 1 zumindest weitgehendst konstant gehalten.

In der daran anschließenden, zweiten Ladephase 47 soll die Ladespannung der Ladevorrichtung 1 zumindest im Wesentlichen konstant gehalten werden. Diese Hauptladespannung U₁ ist im Strom- bzw. Spannungsfeld 38 gemäß Fig. 8 definierbar. Ebenso ist für diese zweite Ladephase 47 eine minimale Ladezeit t₂ und eine maximale Ladezeit t₂ definierbar, wie dies aus Fig. 8 ebenso ersichtlich ist.

In der an die zweite Ladephase 47 anschließenden, dritten Ladephase 48 wird der Ladestrom auf einem vergleichsweise niedrigeren Wert - beispielsweise 5A gemäß dem obersten Eingabefeld des Strom- bzw. Spannungsfeldes 39 in Fig. 8 - weitgehendst konstant gehalten. Zudem ist für diese dritte Ladephase 48 eine Abschaltmethode definierbar. Beispielsweise wird für die Abschaltung bzw. Beendigung der dritten Ladephase 48 der Spannungsverlauf bzw. der Spannungsanstieg am Akkumulator innerhalb einer definierten Zeitdauer überwacht und wird bei Über- bzw. Unterschreiten des jeweiligen Grenzwertes diese dritte Ladephase 48 fortgesetzt bzw. beendet. Insbesondere wird dadurch automatisiert erkannt, ob eine vollständige bzw. nahezu vollständige Aufladung der Batterie erreicht wurde oder nicht. Zusätzlich ist gemäß dem Strom- bzw. Spannungsfeld 39 für diese dritte Ladephase 48 auch eine minimale Ladezeit und/oder eine maximale Ladezeit bzw. eine maximale Spannung (je Batteriezelle [V/Z]) definierbar.

Im Anschluss an die dritte Ladephase 48 kann eine vierte Ladephase 49 folgen, welche bevorzugt durch einen bestimmten Zeitabschnitt für die Durchführung einer Erhaltungsladung (EHL) definiert ist. Diese dritte Ladephase 49 ist im Eingabe- bzw. Auswahlfeld 41 des Softwaremoduls 17 konfigurierbar. Insbesondere kann hier die Art der Erhaltungsladung, nämlich keine Erhaltungsladung, Erhaltungsladung mit Sägezahnspannung, Standard-Erhaltungsladung und dgl. ausgewählt werden. Weiters ist ein Schwellwert für eine Einschaltspannung und eine Ausschaltspannung, bezogen auf die Zellenspannung der zu ladenden Batterie, definierbar. Damit sind also Schwellwerte für die Aktivierung und die Deaktivierung der Erhaltungsladung festgelegt. Ferner ist der maximale Ladestrom, die minimale Pulsdauer, die maximale Pulsdauer und die maximale Zeit für den Pulsbetrieb im Eingabe- bzw. Auswahlfeld 41 für die Ladephase 49 betreffend die optional aktivierbare Erhaltungsladung definierbar.

Im Anschluss an die vierte Ladephase 49 oder alternativ im Anschluss an die dritte Ladephase 48 kann auch eine fünfte Ladephase 50 definiert werden. Die jeweiligen Parameter sind in Fig. 8 im Eingabe- bzw. Auswahlfeld 42 beispielhaft angegeben worden. Insbesondere ist im Softwaremodul 17 einstellbar, ob eine Ladephase 50 betreffend Ausgleichsladung (AGL) für die zu ladende Batterie gewünscht ist oder nicht. Insbesondere ist diese Funktion via das Softwaremodul 17 bei Bedarf aktivierbar bzw. deaktivierbar. Zudem ist der Ladestrom, die Ladezeit, die maximale Spannung und die Verzögerung für diese Ladephase 50 namens Ausgleichsladung einstellbar. Bei aktiver Ausgleichsladung wird die einer Batterie entnommene Energie zumindest zum Teil oder aber vollständig nachgeladen bzw. wird der an die Batterie angeschlossene Verbraucher zumindest zum Teil über die Ladevorrichtung 1 gespeist, sofern die Ladephase 50 für Ausgleichsladung aktiv ist. Die Ladevorrichtung 1 liefert bei aktiver Ausgleichsladung (AGL) - Ladephase 50 - also den Mehrbedarf an Energie und verhindert trotzdem ein Überladen der Batterie.

Das weitere Strom- bzw. Spannungsfeld 40 des Softwaremoduls 17 ist für ein Setup bzw. eine Zusammenstellung der zu Beginn ausgewählten Kennlinientype, insbesondere für die im Detail zu definierende IUIoU-Kennlinie nicht erforderlich bzw. nicht zutreffend und sind daher vom Benutzer in diesem Abschnitt der Erstellungs- bzw. Bearbeitungsmaske 34 keinerlei Einträge vorzunehmen.

Entsprechend dem erfindungsgemäßen Verfahren ist das Softwaremodul 17 bzw. die softwaregesteuerte Vorrichtung, z.B. in Art einer handelsüblichen Recheneinheit 2, zur Erstellung einer den jeweiligen Auswahl- bzw. Einstellwerten entsprechenden, aus mehreren Ladephasen 46 bis 50 zusammengesetzten Ladekennlinie ausgebildet und zur Übertragung derselben an eine zuvor definierte Type einer Ladevorrichtung 1 vorgesehen. Die Typenauswahl betreffend den jeweiligen Aufbau der zu konfigurierenden Ladevorrichtung 1 ist durch das Auswahlfeld 26 betreffend "Gerätetyp" in Fig. 5 beispielhaft veranschaulicht worden.

Wesentlich ist, dass die Erstellungs- bzw. Bearbeitungsmaske 34 für die Definition der Charakteristik von Ladekennlinien ein softwarebasierendes Plausibilitätsüberprüfungsmittel 24 umfassen kann. Dieses Plausibilitätsüberprüfungsmittel 24 ist zumindest für manche Eingabefelder, z.B. betreffend den Hauptladestrom und die Hauptladespannung aktiv implementiert. Insbesondere wird durch dieses softwarebasierende Plausibilitätsüberprüfungsmittel 24 sichergestellt, dass unzutreffende bzw. unter Umständen sogar Schaden verursachende Einstellungen nicht eingebbar sind bzw. nicht an die Ladevorrichtung 1 übertragbar sind. Vorteilhaft ist es, wenn bei Eingabe eines unzutreffenden bzw. überhöhten Wertes von der Recheneinheit 2 (siehe Fig. 1) bzw. gesteuert über das Softwaremodul 17, ein akustisches und/ oder optisches Warn- bzw. Fehlersignal ausgegeben wird. Dadurch wird ein besonders benutzerfreundliches und sicheres Softwaremodul 17 geschaffen. Ferner wird dadurch verhindert, dass die Wahl zu hoher Ladeströme bzw. zu hoher Ladespannungen in Abhängigkeit von der mit der Ladevorrichtung 1 zu ladenden Batterietype zu Zerstörungen bzw. Beschädigungen führt.

Von besonderer Bedeutung ist weiters, dass zumindest für eine Ladephase 46 bis 50, bevorzugt für sämtliche Ladephasen 46 bis 50, ein Fehlerverhalten 51 definierbar ist. Insbesondere ist die bevorzugte Ausführungsform der Ladevorrichtung 1 dazu ausgebildet, um automatisiert die jeweils laufenden Ladevorgänge zu überwachen. Mittels dem Definitionsfeld 51 für "Fehlerverhalten" wird für den Fall einer Erkennung bzw. einer automatischen Erfassung eines Fehlers von der Ladevorrichtung 1 selbsttätig eine entsprechend vordefinierte Maßnahme eingeleitet. Insbesondere kann beim Vorliegen einer allzu großen Abweichung der erfassten Istwerte von den eigentlichen Sollwerten hinsichtlich des Ladeprozesses eine bestimmte Maßnahme, insbesondere eine Gegenmaßnahme oder in Abhängigkeit des jeweiligen Fehlers eine sonstige Abhilfe automatisch eingeleitet werden. Beim Auftreten eines Fehlers während der dritten Ladephase 48 kann eine automatisch eingeleitete Maßnahme z.B. durch eine Umschaltung auf Erhaltungsladung (EHL), also durch einen Wechsel auf die Ladephase 49 definiert sein. Während der vierten Ladephase 49 kann bei einem Fehlerfall ein Neustart des Ladeprozesses automatisiert ausgeführt werden. In einem automatisiert detektierten Fehlerfall während der fünften Ladephase 50 kann via das Softwaremodul 17 eine Umschaltung auf Erhaltungsladung (EHL) konfiguriert werden und nachfolgend von der damit programmierten Ladevorrichtung 1 entsprechend umgesetzt werden. Beim Auftreten eines Fehlers während der ersten und zweiten Ladephase 46, 47 kann eine Abschaltung bzw. Beendigung des Ladeprozesses automatisiert ausführt werden, wenn dies über das Auswahlfeld betreffend Fehlerverhalten 51 ausgewählt bzw. aktiviert wurde und diese Daten bzw. Einstellungen via das Softwaremodul 17 und die Recheneinheit 2 in die Ladevorrichtung 1 übertragen wurden. Welches der möglichen Fehlerverhalten 51 bei einer Erkennung eines Fehlers automatisiert umgesetzt werden soll, ist im Softwaremodul 17 bzw. in der Erstellungs- bzw. Bearbeitungsmaske 34 den jeweiligen Erfordernissen entsprechend durch den Benutzer einstellbar.

Auch hinsichtlich der Auswahl bzw. Einstellung des Fehlerverhaltens 51 für die Ladevorrichtung 1 ist bevorzugt ein softwarebasierendes Plausibilitätsüberprüfungsmittel 24 ausgebildet, sodass die Einstellung bzw. Konfiguration eines falschen bzw. potentiell Schaden verursachenden Fehlerverhaltens 51 automatisiert unterbunden wird bzw. von der Ladevorrichtung 1 nicht umgesetzt werden kann.

Für aktuelle Updates des Softwaremoduls 17 bzw. zum Download von geprüften bzw. bewährten Einstellungen bzw. von freigegebenen und zulässigen Ladekennlinien kann die Recheneinheit 2 in einfacher Art und Weise auch in ein globales Datenübertragungsnetzwerk, wie z.B. das Internet, eingebunden werden. Alternativ ist es auch denkbar, die Ladevorrichtung 1 selbst in ein Datenübertragungsnetzwerk zu schalten. Dadurch wird eine besonders fehlerfreie Abänderung des Ladeverhaltens der Ladevorrichtung 1 erreicht und ist es darüber hinaus auch möglich, dass derartige Updates bzw. Neukonfigurationen auch durch Laien, welche über keine besonderen Fachkenntnisse in der Ladetechnologie für Akkumulatoren verfügen, problemlos und fehlersicher ausgeführt werden können.

Die Ausführungsbeispiele zeigen mögliche Ausführungsvarianten der Ladevorrichtung 1, der Recheneinheit 2, des Softwaremoduls 17 und des Gesamtsystems, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus bzw. der Funktionsweise der Ladevorrichtung 1 bzw. der Recheneinheit 2 diese bzw. deren Bestandteile teilweise unmaßstäblich und schematisch dargestellt wurden.

Die einzelnen in den Fig. 1, 2; 3; 4; 5, 6; 7, 8 gezeigten Ausführungen können den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Ladevorrichtung
- 2: Recheneinheit
- 3: Gehäuse
- 4: Netzkabel
- 5: Ladeleitung

- 6: Ladeleitung
- 7: Steuervorrichtung
- 8: Leistungsteil
- 9: Bedienvorrichtung
- 10: Anzeigevorrichtung

- 11: Mikrokontroller
- 12: Speichervorrichtung
- 13: Datenschnittstelle
- 14: Steckvorrichtung
- 15: Kabel

- 16: Speichervorrichtung
- 17: Softwaremodul
- 18: Datenschnittstelle
- 19: Berechtigungsüberprüfungsmittel
- 20: Anmeldemaske

- 21: Benutzername
- 22: Kennwort
- 23: Zugangscode
- 24: Plausibilitätsüberprüfungsmittel
- 25: Schaltfläche

- 26: Gerätetyp
- 27: Anzeigetyp
- 28: Leistungsdatenfeld
- 29: Zusatzoptionenfeld
- 30: Kennlinienauswahlfeld

- 31: Kennlinienbeschreibungsfeld
- 32: Schaltfläche
- 33: Schaltfläche
- 34: Erstellungs- bzw. Bearbeitungsmaske
- 35: Auswahlfeld

- 36: Eingabefeld
- 37: Strom- bzw. Spannungsfeld
- 38: Strom- bzw. Spannungsfeld
- 39: Strom- bzw. Spannungsfeld
- 40: Strom- bzw. Spannungsfeld

- 41: Eingabe- bzw. Auswahlfeld
- 42: Eingabe- bzw. Auswahlfeld
- 43: Eingabe- bzw. Auswahlfeld
- 44: Eingabefeld
- 45: Schaltfläche

- 46: Ladephase
- 47: Ladephase
- 48: Ladephase
- 49: Ladephase
- 50: Ladephase

- 51: Fehlerverhalten

## Patentansprüche

1. Verfahren zur Konfiguration des Betriebsverhaltens einer Ladevorrichtung (1) für Akkumulatoren, bei welchem über eine Bedienerschnittstelle die jeweils benötigten Parameterwerte, wie z.B. Ladestrom, Ladespannung, Ladedauer und dgl. einstellbar sind und diese Einstellungen das Steuerverhalten einer Steuervorrichtung (7) der Ladevorrichtung (1) beeinflussen, wobei die Einstellung der Parameterwerte an einem Softwaremodul (17) vorgenommen wird, das auf einer Recheneinheit (2) für allgemeine Verwendungszwecke, wie z.B. einem Personal-Computer oder Handheld-Computer, ausführbar ist und nach erfolgter Einstellung diese Parameterwerte oder ein diese Einstellungen enthaltender Datensatz oder eine diese Einstellungen repräsentierende Kennung über eine erste Datenschnittstelle (18) der Recheneinheit (2) und eine zweite Datenschnittstelle (13) der Ladevorrichtung (1) in deren Steuervorrichtung (7) geladen und zur späteren Abarbeitung in der Steuervorrichtung (7) dauerhaft hinterlegt werden, **dadurch gekennzeichnet, dass** mittels dem Softwaremodul (17) sämtliche Ladephasen (46-50), wie Hauptladung, Abschlussladung, Erhaltungsladung, Ausgleichsladung, einer von einem Benutzer über das Softwaremodul (17) definierten oder einer aus einer vordefinierten Auswahlmenge ausgewählten Ladekennlinie batteriespezifisch einstellbar sind, worauf vom Softwaremodul (17) eine den jeweiligen Einstell- bzw. Auswahlwerten für die Ladephasen (46-50) entsprechende Ladekennlinie für eine von einem Benutzer definierte oder für eine aus einer vordefinierten Auswahlmenge ausgewählten Type einer Ladevorrichtung (1) erstellt wird.

2. Verfahren nach Anspruch 1, **dadurch gekennzeichnet, dass** mittels einem Eingabe- bzw. Auswahlfeld (43) im Softwaremodul (17) Grenzwerte für Zustandsparameter betreffend den zu ladenden Akkumulator, wie Batterie-Unterspannung, Batterie-Überspannung, Batterie-Temperatur-Referenz, Batterie-Temperatur-Minimum, Batterie-Temperatur-Maximum, Temperaturkompensation, definierbar sind.

3. Verfahren nach Anspruch 1 oder 2, **dadurch gekennzeichnet, dass** mittels einem Eingabe- bzw. Auswahlfeld (41) des Softwaremoduls (17) betreffend die Ladephase (49) für Erhaltungsladung die Grenzwerte für Spannung-Ein, Spannung-Aus, maximaler Ladestrom, minimale Pulsdauer und maximale Pulsdauer eingestellt werden.

4. Verfahren nach einem der vorhergehenden Ansprüche, **dadurch gekennzeichnet, dass** mittels einem Eingabe- bzw. Auswahlfeld (42) des Softwaremoduls (17) betreffend die Ladephase (50) für Ausgleichsladung die Grenzwerte für Ladestrom, Ladezeit, maximale Spannung und für Verzögerung eingestellt werden.

5. Verfahren nach einem der vorhergehenden Ansprüche, **dadurch gekennzeichnet, dass** mittels einem Eingabe- bzw. Auswahlfeld (37, 38) des Softwaremoduls (17) betreffend die Ladephase (46, 47) für Hauptladung die Grenzwerte für Hauptladestrom, Hauptladespannung, minimale Ladezeit und maximale Ladezeit eingestellt werden.

6. Verfahren nach einem der vorhergehenden Ansprüche, **dadurch gekennzeichnet, dass** ein laufender Ladeprozess automatisiert überwacht wird und der Ladeprozess beim Auftreten eines Fehlers gemäß einem über das Softwaremodul (17) vordefinierbaren Fehlerverhalten (51) automatisiert verändert oder beendet wird.

7. Verfahren nach einem der vorhergehenden Ansprüche, **dadurch gekennzeichnet, dass** über ein softwarebasierendes Plausibilitätsüberprüfungsmittel (24) des Softwaremoduls (17) eine Plausibilitätsüberprüfung der benutzerseitig gewählten bzw. beabsichtigten Einstellungen im Hinblick auf die Type und/oder die technischen Daten des zu ladenden Akkumulators und/oder in Abhängigkeit der zu konfigurierenden Ladevorrichtung (1) automatisiert ausgeführt wird.

8. Verfahren einem der vorhergehenden Ansprüche, **dadurch gekennzeichnet, dass** unzulässige Einstellungen vom Softwaremodul (17) nicht angenommen werden oder an die Steuervorrichtung (7) der Ladevorrichtung (1) nicht übertragbar sind.

9. Verfahren nach einem der vorhergehenden Ansprüche, **dadurch gekennzeichnet, dass** ein Benutzer des Softwaremoduls (17) mittels einem softwarebasierenden Plausibilitätsüberprüfungsmittel (24) auf unzulässige, sicherheitskritische oder eventuell Schäden verursachende Einstellungen hingewiesen wird.

10. Verfahren nach einem der vorhergehenden Ansprüche, **dadurch gekennzeichnet, dass** vom Softwaremodul (17), insbesondere für dessen grundsätzliche Bedienbarkeit oder für eine Veränderung oder Generierung von Einstellungen, eine Identifizierung bzw. Berechtigungsprüfung vorgenommen wird.

11. Verfahren nach einem der vorhergehenden Ansprüche, **dadurch gekennzeichnet, dass** vor dem Zugriff auf Konfigurationsmasken des Softwaremoduls (17) eine Identifizierung bzw. Berechtigungsprüfüng vorgenommen wird.

12. Verfahren nach Anspruch 10 oder 11, **dadurch gekennzeichnet, dass** die Identifizierung bzw. Berechtigungsprüfung durch Eingabe eines Benutzernamen (21) und eines Kennworts (22) oder mittels einem charakteristischen Zugangscode (23) erfolgt.

13. Verfahren nach Anspruch 10 oder 12, **dadurch gekennzeichnet, dass** die Identifizierung bzw. Berechtigungsprüfung mittels einem elektronischen Schlüssel, wie z.B. einem Dongle für die Recheneinheit (2) oder für das Softwaremodul (17), mittels einem RFID-Tag oder Transponder oder mittels einem biometrischen Identifizierungsmerkmal, wie z.B. einem Fingerabdruck, durchgeführt wird.

14. Verfahren nach einem der vorhergehenden Ansprüche, **dadurch gekennzeichnet, dass** ein Benutzername (21) oder eine Kennung eines Nutzungsberechtigten bzw. eines die Einstellungen vornehmenden oder eines die Einstellungen in die Ladevorrichtung (1) übertragenden Benutzers des Softwaremoduls (17) an die Steuervorrichtung (7) übertragen und in der Ladevorrichtung (1) dauerhaft hinterlegt wird.

15. Verfahren nach einem der vorhergehenden Ansprüche, **dadurch gekennzeichnet, dass** in der Ladevorrichtung (1) hinterlegte Einstellungen bzw. Parameterwerte und/oder ein Name bzw. Code eines Einstellers bzw. Nutzungsberechtigten über die erste und die zweite Datenschnittstelle (13, 18) vom Softwaremodul (17) gelesen und an der Recheneinheit (2) visualisiert wird/werden.

16. Softwaregesteuerte Vorrichtung zur Konfiguration der Betriebsweise einer Ladevorrichtung (1) für Akkumulatoren, wobei eine Bedienerschnittstelle zur Einstellung von Amplituden für eine Ladekennlinie einer Ladevorrichtung (1) durch ein Softwaremodul (17) gebildet ist, das auf einer Recheneinheit (2) für allgemeine Verwendungszwecke, wie z.B. einem Personal-Computer oder Handheld-Computer lauffähig ist, und wobei an dieser Recheneinheit (2) eine standardisierte, erste Datenschnittstelle (18) zur Übertragung der Parameterwerte oder zur Übertragung einer diese Parameterwerte repräsentierenden Kennung ausgebildet ist und diese erste Datenschnittstelle (18) mit einer zweiten Datenschnittstelle (13) an einer Ladevorrichtung (1) korrespondiert, **dadurch gekennzeichnet, dass** die softwaregesteuerte Vorrichtung Mittel zur Definition der Charakteristik einer gewünschten Ladekennlinie bestehend aus mehreren Ladephasen (46-50), wie Hauptladung, Abschlussladung, Erhaltungsladung, Ausgleichsladung, umfasst, und die softwaregesteuerte Vorrichtung zur Erstellung einer den jeweiligen Einstell- bzw. Auswahlwerten entsprechenden, aus mehreren Ladephasen (46 bis 50) zusammengesetzten Ladekennlinie ausgebildet und zur Übertragung derselben an eine zuvor definierte Type einer Ladevorrichtung (1) vorgesehen ist.

17. Vorrichtung nach Anspruch 16, **dadurch gekennzeichnet, dass** die erste Datenschnittstelle (18) durch eine kabelgebundene Schnittstelle, insbesondere durch eine RS232-Schnittstelle oder durch eine USB-Schnittstelle gebildet ist.

18. Vorrichtung nach Anspruch 16, **dadurch gekennzeichnet, dass** die erste Datenschnittstelle (18) durch eine kabellose Schnittstelle, insbesondere durch eine Infrarotschnittstelle oder Funkschnittstelle gebildet ist.

19. Vorrichtung nach einem der Ansprüche 16 bis 18, **dadurch gekennzeichnet, dass** sie Mittel (19) zur Berechtigungsüberprüfung umfasst.

20. Vorrichtung nach Anspruch 19, **dadurch gekennzeichnet, dass** die Mittel (19) zur Berechtigungsüberprüfung durch eine allgemeine, standardisierte Software der Recheneinheit (2), wie z.B. durch eine standardmäßige Passwortabfrage der Betriebssoftware, gebildet sind.

21. Vorrichtung nach Anspruch 19, **dadurch gekennzeichnet, dass** die Mittel (19) zur Berechtigungsüberprüfung durch eine Benutzeridentifizierung und Kennworteingabe oder durch einen Zugangscode für das Softwaremodul (17) gebildet sind.

22. Vorrichtung nach Anspruch 19, **dadurch gekennzeichnet, dass** die Mittel (19) zur Berechtigungsüberprüfung durch einen an eine Schnittstelle der Recheneinheit (2) bedarfsweise anschaltbaren elektronischen Schlüssel, wie z.B. einen Dongle, einen RFID-Tag, einen Transponder oder dgl., gebildet sind.

23. Vorrichtung nach Anspruch 16, **dadurch gekennzeichnet, dass** dessen Datenschnittstelle (18) und das Softwaremodul (17) zur Übertragung einer Kennung oder eines Namens eines Benutzers in die Steuervorrichtung (7) einer Ladevorrichtung (1) ausgebildet ist.

24. Ladevorrichtung (1) für Akkumulatoren, mit einer softwaregesteuerten Steuervorrichtung (7) und einem damit in der Betriebsweise beeinflussbaren Leistungsteil (8), wobei eine Datenschnittstelle (13) zur bedarfsweisen, datentechnischen Anbindung an eine eigenständige Recheneinheit (2) für allgemeine Verwendungszwecke ausgebildet ist, und dass die Steuervorrichtung (7) eine Speichervorrichtung (12) umfasst, welche zur dauerhaften Hinterlegung von Parameterwerten für Ladekennlinien bzw. von Einstellungen für benutzerindividuelle Betriebsweisen vorgesehen ist, wobei die Parameterwerte bzw. Einstellungen über die Datenschnittstelle (13) empfangbar und von der Steuervorrichtung (7) verarbeitbar sind, **dadurch gekennzeichnet, dass** die Ladevorrichtung (1) zum Empfangen und zur Verarbeitung von Daten betreffend Ladekennlinien aus mehreren Ladephasen (46-50), wie Hauptladung, Abschlussladung, Erhaltungsladung, Ausgleichsladung, ausgebildet ist.

25. Ladevorrichtung nach Anspruch 24, **dadurch gekennzeichnet, dass** die Speichervorrichtung (12) zur dauerhaften Hinterlegung von Benutzerdaten bzw. von Daten über den Einsteller der Parameterwerte bzw. über den Konfigurator der Betriebsweise ausgebildet ist.

26. Ladevorrichtung nach Anspruch 24 oder 25, **dadurch gekennzeichnet, dass** die Steuervorrichtung (7) zum Auslesen der hinterlegten Parameterwerte und/oder Konfiguratordaten und zur Übertragung an eine periphere Recheneinheit (2) für allgemeine Verwendungszwecke, wie z.B. einen Personal-Computer oder Handheld-Computer ausgebildet ist.

27. Ladevorrichtung nach einem der Ansprüche 24 bis 26, **dadurch gekennzeichnet, dass** eine Anzeigevorrichtung (10) zur Visualisierung der aktuell gültigen Parameterwerte und/oder zur Anzeige einer unverwechselbaren Kennung für das gegenwärtige Ladeverhalten ausgebildet ist.

28. Ladevorrichtung nach einem der Ansprüche 24 bis 27, **dadurch gekennzeichnet, dass** eine Bedienvorrichtung (9) und eine Anzeigevorrichtung (10) zum Abrufen und/oder Verändern der in der Speichervorrichtung (12) hinterlegten Einstellungen ausgebildet ist.

29. System zur Durchführung des Verfahrens nach Anspruch 1, **dadurch gekennzeichnet, dass** es eine softwaregesteuerte Vorrichtung nach Anspruch 16 und eine Ladevorrichtung (1) nach Anspruch 24 umfasst.
